# FASCICULE DE BREVET EUROPEEN

(11) **EP 0 317 554 B1**
(45) Date de publication et mention de la délivrance du brevet: **17.03.1993**
(21) Numéro de dépôt: 87903708.3
(22) Date de dépôt: 10.06.1987
(51) Int. Cl.: B64C 27/52, B64C 27/58, B64C 27/02

(54) **DISPOSITIF D'ASSISTANCE AU PILOTAGE D'AERONEFS A VOILURE TOURNANTE**
SERVOSTEUERUNGSVORRICHTUNG EINES DREHFLÜGELFLUGZEUGES
STEERING AID FOR ROTOR AIRCRAFT

(43) Date de publication de la demande: 31.05.1989
(73) Titulaire: RABOUYT, Denis, 92140 Clamart (FR)
(72) Inventeur: RABOUYT, Denis, 92140 Clamart (FR)
(86) Numéro de dépôt international: FR8700204
(87) Numéro de publication internationale: WO8809747

(56) Documents cités:
- DE-A- 3 431 583
- FR-A- 1 375 454
- GB-A- 2 152 461

## Description

La présente invention concerne les aéronefs à voilure tournante et notamment les autogires.

L'autogire avec sa voilure de sustentation montée sur arbre fixe ou rotatif et tournant en autorotation sous l'effet du vent relatif et avec une hélice propulsive ou tractive présente sur l'hélicoptère dont le rotor doit assurer la double fonction de sustentation et de propulsion, l'avantage d'un coût de fabrication de beaucoup moins élevé.

Pour remédier à l'inconvénient présenté par l'autogire de transmettre à la commande de vol, et donc au pilote, d'importants efforts provenant de l'action du vent relatif sur la voilure compte tenu des dimensions importantes de cette dernière et des charges qu'elle supporte au cours des différents mouvements de l'autogire, de ses accélérations et de ses décélérations, ainsi que des variations dans la direction et/ou l'intensité du vent relatif, on a proposé de monter l'arbre de la voilure tournante sur un axe de tangage légèrement décalé vers l'avant par rapport à l'axe de rotation de la voilure, et disposé en dessous du plan de rotation de cette dernière.

Grâce à cette disposition, on a obtenu non seulement une compensation partielle des efforts de tangage et une diminution des réactions au niveau de la commande de vol, mais également un effet de semi-automaticité de pilotage en tangage. En effet, si pour une raison quelconque, la vitesse de l'autogire diminue, la traînée aérodynamique au niveau de la voilure diminue en conséquence. Moins freinée vers l'arrière par la dite traînée, la voilure s'incline vers l'avant et l'autogire se met alors en descente et accélère. Mais cette accélération va ramener l'autogire à sa vitesse précédente et la traînée aérodynamique, reprenant sa valeur précédente, tire la voilure vers l'arrière, ce qui la redresse et ralentit la vitesse de l'autogire.

Malgré cela, cependant, la réaction de tangage que doit contrer le pilote avec sa commande de vol, varie, pour une même masse à altitude constante, avec la vitesse ou, pour une vitesse égale, avec la masse. C'est pourquoi le décalage de l'axe de tangage par rapport à l'axe de rotation de la voilure et sa distance du plan de rotation de celle-ci sont généralement choisis pour la vitesse de croisière de l'autogire transportant un certain pourcentage de la charge maximum. On équilibre ainsi le couple piqueur de sustentation au couple cabreur de traînée et, à la vitesse de croisière et à charge équivalente au pourcentage choisi de la charge maximum, la réaction est alors nulle sur la commande de vol.

Par contre, l'effort que devra fournir le pilote pour faire voler l'autogire à une vitesse différente sera d'autant plus grand que cette vitesse sera éloignée de la vitesse de croisière, puisqu'il aura à faire face à un couple cabreur d'autant plus élevé qu'il volera plus vite,ou à un couple piqueur également d'autant plus élevé qu'il volera plus lentement. On a donc proposé dans GB-A-2152461 et FR-A-1375454, des resorts de compensation pour soulager le pilote en évitant que l'effort à fournir par lui ne devienne excessif en cas de vol prolongé à haute ou basse vitesse, ces ressorts pouvant être éventuellement réglés par une fixation à plusieurs points d'ancrage possibles. Mais ce système, non seulement nécessite une intervention avant chaque vol, mais aussi dans la mesure où il agit seulement dans le sens du "cabré" ou seulement dans le sens du "piqué", ne permet pas de couvrir toutes les conditions d'un même vol tel que projeté ni, a fortiori, tel que réalisé concrètement, le pilote pouvant avoir à faire face à des circonstances non prévues lors de l'établissement du plan de vol.

La présente invention a pour but de remédier à ces inconvénients et propose, à cet effet, un dispositif d'assistance au pilotage permettant, dans un aéronef à voilure tournante, d'annuler toutes les réactions, notamment celles du tangage, au niveau de la commande du vol, de manière à rendre la commande légère et le pilotage précis dans toutes les conditions du vol, soit à basse ou haute vitesse, soit au décollage ou à l'atterrissage, même à la verticale.

Elle a pour objet un aéronef à voilure tournante articulée sur le corps de l'aéronef, comportant un levier de commande à la disposition du pilote et un dispositif élastique auxiliaire apportant une aide mécanique au pilote pour le positionnement angulaire du dit corps par rapport à l'axe de rotation de la dite voilure, caractérisé en ce que le dit dispositif élastique est à deux effets axialement opposés et présente un point zéro déplaçable sous l'effet d'une commande accessible en vol au pilote et indépendante de la position du levier de commande.

D'autres caractéristiques et d'autres avantages de l'invention apparaîtront au cours de la description qui va suivre et qui se réfère aux planches jointes montrant plusieurs exemples de réalisation donnés à titre indicatif et non limitatif de la présente invention.

Les figures 1 et 2 montrent une commande d'autogire avec dispositif élastique selon l'invention, la figure 2 étant une vue de droite de la figure 1.

La figure 3 montre une variante de la figure 1.

Les figures 4, 5 et 6 montrent trois positions d'un autre dispositif élastique suivant l'invention.

La voilure de sustentation ou rotor 1 comprenant le moyeu 2 et les pales 3, est montée sur un arbre 4 porté par un palier 5. Ce palier est articulé, d'une part, sur un axe 6 et, d'autre part, sur un axe 7 perpendiculaire au premier. L'axe 6 sera appelé axe de tangage dans la présente description et l'axe 7, axe de roulis.

L'axe de roulis tourillonne dans un palier ( non représenté) incorporé à un mât 9 solidaire du corps de l'autogire et disposé en avant du palier 5.

L'arbre 4 du rotor est entraîné en rotation, grâce à une articulation à la cardan 11, par un arbre 10 représenté partiellement parce que ne faisant pas partie de l'invention.

Le palier 5 porte un bras 8 portant lui-même un embiellage 43 en forme de parallélogramme dont la barre supérieure 12, solidaire du bras 8, est articulée sur l'extrémité de deux tiges 13 et 14, et dont la barre inférieure 15 est articulée sur l'autre extrémité des deux dites tiges.

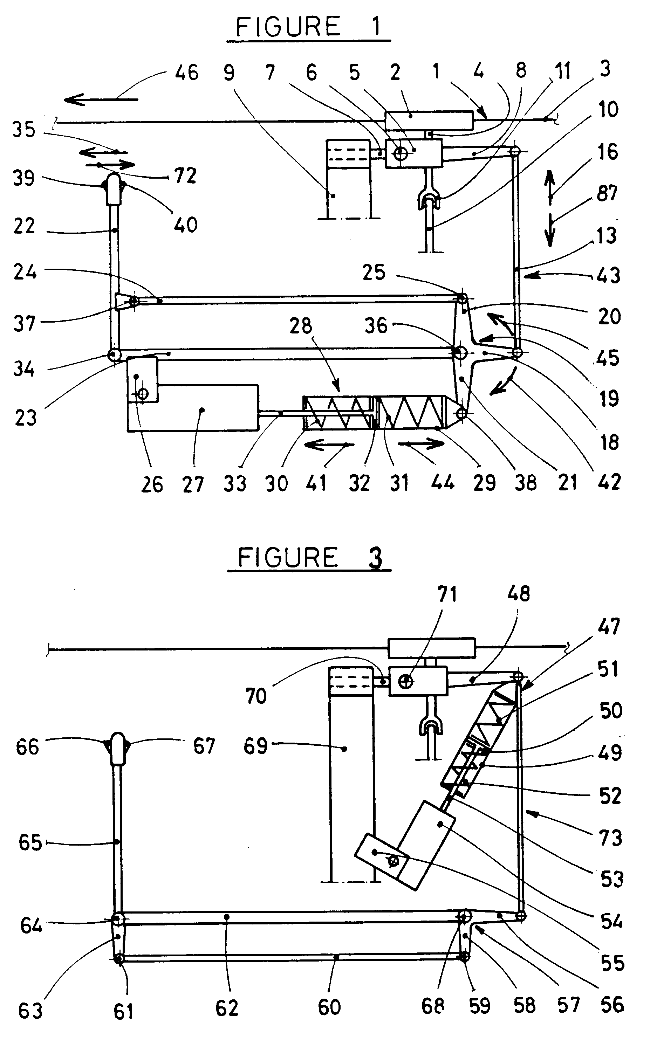

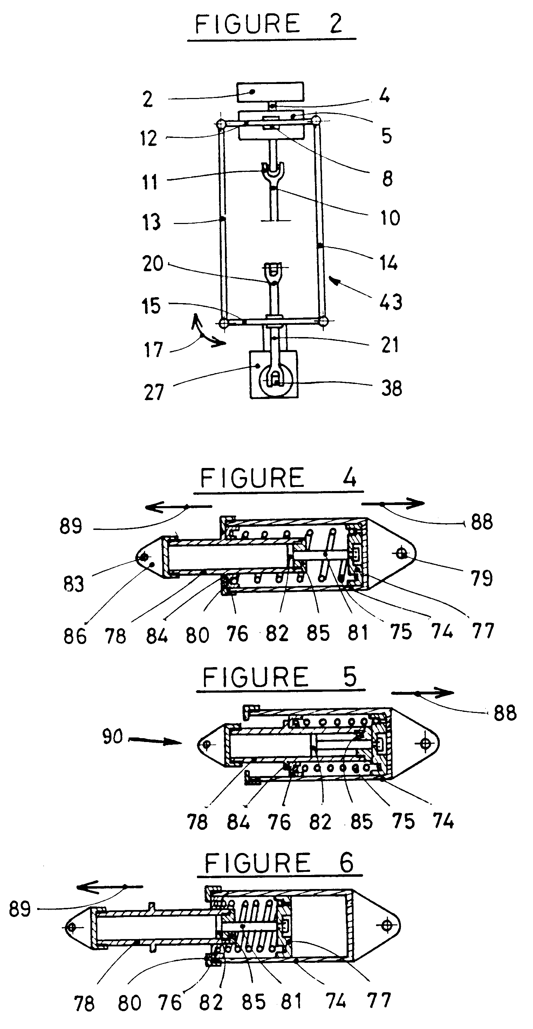

Ces quatre articulations permettent, à la fois un déplacement de l'ensemble du parallélogramme suivant les flèches 16 et 87 (figure 1) et sa déformation suivant la flèche 17 ( figure 2).

La barre inférieure 15 fait corps avec un bras 18 d'un renvoi d'angle 19 qui en comporte deux autres 20 et 21 et qui est articulé en 36 comme il sera expliqué plus loin.

Par ailleurs, la commande de vol comprend une tige manuelle 22 articulée en 34 sur un tube 23 monté rotatif dans des paliers non représentés qui sont solidaires du corps de l'autogire et empêchent la translation axiale du dit tube 23.

Une biellette 24 relie le bras 20 du renvoi 19 sur lequel elle est articulée en 25, au levier 22 sur lequel elle est articulée en 37.

Un dispositif élastique 28 est articulé en 38 sur le bras 21. Il est composé d'un cylindre 29 qui reçoit deux ressorts identiques 30 et 31. Ces ressorts sont au point zéro en position médiane, c'est-à-dire qu'ils ne travaillent pas dans cette position. Ils sont solidaires, d'une part, d'un piston 32 muni d'une tige 33 et qui coulisse à l'intérieur du cylindre et, d'autre part, des extrémités du cylindre 29.

Sur le tube 23, est soudé un support 26 sur lequel est articulé un ensemble 27 comprenant un vérin mécanique à écrou fixe et tige filetée commandée en rotation par un moteur électrique à double action. La tige filetée commande le déplacement axial de la tige 33 et donc le déplacement du piston 32 à l'intérieur du cylindre 29, soit dans un sens, soit dans l'autre.

L'articulation de l'ensemble 27 sur le support 26 ne lui permet pas de mouvements de translation par rapport à celui-ci. Il reste donc fixe et, par la tige filetée et la tige 33, c'est donc le piston 32 qui constitue le point d'appui des ressorts 30 et 31, quelle que soit la position du dit piston à l'intérieur du cylindre 29.

La poignée de la tige 22 porte deux contacteurs électriques 39 et 40. L'enclenchement du contacteur 39 assure la mise en marche du moteur électrique de-l'ensemble 27 en provoquant le déplacement du piston 32 vers le dit ensemble (flèche 41), tandis que l'enclenchement du contacteur 40 assure la mise en marche du moteur électrique de l'ensemble 27 en provoquant le déplacement du piston 32 vers l'articulation 38 ( flèche 44).

Les articulations 34 et 36 sont telles qu'un mouvement du levier 22 autour de 34 suivant les flèches 35 ou 72, c'est-à-dire en tangage, se transforme en un mouvement de même valeur angulaire et de même sens du renvoi 19 autour de 36. Par contre, tout mouvement du levier 22 autour de 34 dans un plan perpendiculaire à la flèche 35 provoque la rotation de l'ensemble 23 - 24 - 19 - 28 - 26 et 27 autour de l'axe de rotation du tube 23 et ce mouvement entraîne, par le mouvement imprimé au bras 18 et donc à la barre 15, une déformation suivant la flèche 17 de l'embiellage en parallélogramme 43.

Dans ces conditions, le fonctionnement s'établit comme décrit ci-après.

L'autogire étant en vol de croisière dans le sens indiqué par la flèche 46, avec le rotor 1 sensiblement à l'horizontale, le palier 5, l'embiellage 43, le renvoi d'angle 19 et le levier de commande de vol 22 sont dans les positions illustrées figures 1 et 2.

Si le pilote désire cabrer son appareil, il tire vers l'arrière, dans le sens de la flèche 72, la tige de commande de vol 22. Le mouvement de cette dernière est transmis, par la biellette 24, au renvoi 19 qui tourne autour de son axe 36, dans le sens de la flèche 42 et fait descendre l'embiellage43. Par sa barre supérieure 12, celui-ci tire vers l'arrière l'ensemble constitué par le bras 8, le palier 5, l'arbre 4 et le rotor 1 : celui-ci pivote autour de l'axe 6 et se met au cabré.

Ce fonctionnement est celui d'un autogire classique. Mais il s'en différencie en ce que le pilote, en même temps qu'il a tiré vers l'arrière sa tige de commande de vol 22, a enclenché le contacteur 39 agissant sur le vérin de l'ensemble 27. Celui-ci a alors déplacé axialement la tige 33 dans le sens de la flèche 41, comprimant le ressort 30 et étirant le ressort 31. Ainsi les deux ressorts tendent-ils à entraîner le cylindre 29 dans lé même sens ( flèche 41), le ressort 30 agissant en compression et le ressort 31 en traction : le renvoi 19 tend à tourner dans le sens de la flèche 42, à faire descendre l'embiellage 43 et à mettre l'appareil au cabré.

Le pilote n'a donc pas besoin d'un effort important pour tirer la tige de commande de vol 22 vers l'arrière puisque les ressorts 30 et 31 manoeuvrés par le vérin de l'ensemble 27 l'ont considérablement aidé à faire ce mouvement.

Les phénomènes seront inversés si le pilote veut faire piquer son autogire. Il enclenche le contacteur 40 en même temps qu'il pousse vers l'avant ( flèche 35) la tige de commande de vol 22.

Dans ce cas, son action sur la tige 22 est transmise, par la biellette 24 au renvoi 19 qui est ainsi entraîné dans le sens de la flèche 45. Mais simultanément, le vérin 27 déplace le piston 32 dans le sens de la flèche 44 comprimant le ressort 31 et étirant le ressort 30. Il s'ensuit un déplacement du cylindre 29 dans le même sens que le piston 32 et un entraînement en rotation du renvoi 19 dans le sens de la flèche 45.

Comme dans le cas précédent, les ressorts 30 et 31 manoeuvrés par le vérin 27 ont considérablement aidé le pilote dans sa manoeuvre.

La commande de l'autogire en a été ainsi rendue bien plus légère et le pilotage peut être plus précis, même dans des conditions de vol très différentes des conditions normales de croisière.

La commande en roulis se fait classiquement en manoeuvrant de droite à gauche ou de gauche à droite la tige de commande de vol 22. Celle-ci entraîne alors en rotation le tube 23 et tout ce qui est porté par lui, à savoir l'ensemble 26 - 27 - 29 et 19. Dans sa rotation, le bras 18 du renvoi d'angle 19 entraîne la barre transversale 15 de l'embiellage 43 et, par les tiges 13 et 14, la barre transversale 12. A son tour, celle-ci va, par le bras 8, faire pivoter l'ensemble du rotor l autour de l'axe de roulis 7.

Il est à noter que le dispositif élastique d'assistance au tangage, quelle que soit la position du piston 32 dans le cylindre 29, n'intervient en aucune manière sur la commande en roulis.

Un second avantage du dispositif proposé par l'invention pour assister le pilote dans sa conduite est que celui-ci peut en certaines conditions lâcher la tige de commande de vol 22.

L'autogire étant en vol de croisière dans des conditions normales, imaginons que le pilote lâche sa tige de commande.

Si la traînée aérodynamique augmente, cette augmentation se traduit par une tendance du rotor à se cabrer en s'inclinant vers l'arrière. L'embiellage 43 tend donc à descendre et à faire basculer ( flèche 42) le renvoi d'angle 19 autour de son axe 36 et cette bascule serait transmise par la biellette 24 au levier de commande de vol 22 tiré alors vers l'arrière suivant la flèche 72.

Mais les deux ressorts 30 et 31, sollicités le premier en traction et le second en compression, vont s'opposer à ces mouvements et en absorber les effets. Ainsi les réactions vont-elles être atténuées, voire pratiquement annulées si les ressorts sont correctement tarés.

De même, si les conditions de fonctionnement du rotor 1 changent dans le sens de l'augmentation du couple piqueur, cette augmentation va se traduire par une tendance du rotor à s'incliner vers l'avant et donc à faire monter l'embiellage 43, à faire tourner le renvoi d'angle 19 suivant la flèche 45 et à basculer le levier de commande de vol 22 dans le sens de la flèche 35. Mais, comme dans le cas précédent, les ressorts 30 et 31 vont s'opposer à ces mouvements et en absorber les effets, leur action étant d'ailleurs inversée puisque le ressort 30 est alors sollicité en compression et le ressort 31 en traction.

Un troisième avantage, découlant d'ailleurs du second, est la possibilité et la facilité d'installer une commande semi-automatique ou même automatique de l'autogire.

En effet, la traînée aérodynamique qui provoque un effet de cabrage est directement fonction de la vitesse de l'autogire. On peut alors asservir la commande de l'ensemble 27 à un anémomètre de manière à provoquer, quand nécessaire, soit un effet de piqué en cas de ralentissement, soit un effet de cabrage dans le cas contraire.

Il est entendu que l'on peut, sans sortir de l'invention, modifier des détails de construction ou leur arrangement en vue d'obtenir un même résultat.

Ainsi la figure 3 montre une variante de réalisation de l'invention dans laquelle le dispositif élastique 47 suivant l'invention n'est pas associé, comme sur la figure 1, au tube de roulis faisant partie de la commande de vol, mais est directement articulé sur un bras 48 du palier du rotor.

Ce dispositif élastique, identique à celui décrit sur la figure 1, comprend un cylindre 49 à l'intérieur duquel un piston coulissant 50 est solidaire de deux ressorts 51 et 52 identiques et montés en opposition sur le dit piston. Une tige 53 est reliée à une tige filetée d'un vérin mécanique 54 articulé sur un support 55 lui-même fixé sur le mât 69 portant le rotor,par l'intermédiaire d'un axe de roulis 70 et d'un axe de tangage 71.

La commande de vol est simplifiée par rapport à celle de la figure 1. Elle comprend un levier 65 avec ses deux contacteurs électriques, l'un 66 cabreur et l'autre 67 piqueur, un tube rotatif dit tube de roulis 62 portant à ses extrémités deux articulations 68 et 64 sur lesquelles sont articulés respectivement un renvoi d'angle 57 et le levier de commande de vol 65.Par ailleurs, celui-ci se continue au delà de l'articulation 64 par un bras 63 sur lequel est articulée en 61 une biellette 60 articulée à son autre extrémité en 59 sur le bras 58 du renvoi d'angle 57. Enfin, celui-ci comporte un deuxième bras 56 articulé sur un embiellage 73 en parallélogramme analogue à l'embiellage 43 des figures 1 et 2.

Le fonctionnement de cet ensemble est analogue à celui illustré figure 1, tout déplacement du piston 50 dans le cylindre 49 provoquant une réaction soit au cabré soit en piqué sur le rotor comme dans le cas de la figure 1.

L'intérêt de cette disposition est la diminution des contraintes dans les organes de transmission de la commande de vol par rapport à la disposition illustrée figure 1.

Les figures 4, 5 et 6 montrent également un autre exemple de réalisation 90 de l'invention dans lequel un seul ressort est utilisé.

Cette réalisation comprend un cylindre 74, un ressort 75, deux coupelles 76 et 77 et un tiroir-navette 78.

Le cylindre 74 porte une articulation 79 permettant de le monter soit comme le cylindre 29 de la figure 1, soit comme le cylindre 49 de la figure 3. Il est partiellement fermé à l'autre extrémité par une bague d'appui 80.

Les coupelles 76 et 77 sont rigoureusement ajustées dans le cylindre 74 et constituent ainsi de véritables pistons coulissant de façon étanche. De même la coupelle 76 coulisse de façon étanche sur le tiroir-navette 78.

Enfin, les coupelles 76 et 77 présentent chacune une perforation mettant en communication leurs deux faces et dont le rôle sera expliqué plus loin et la coupelle 77 porte une tige centrale 81 terminée par un talon circulaire 82.

Le tiroir-navette 78 porte un épaulement 84 et se termine à une extrémité, par un bouchon perforé 85 à travers lequel passe la tige centrale 81 de la coupelle 77 et, à l'autre extrémité, par un chapeau 86 articulé en 83 sur une tige de vérin non dessinée.

Sur la figure 4, le dispositif est au repos, le ressort 75 étant comprimé entre les coupelles 76 et 77. La coupelle 77 est en contact avec le fond du cylindre tandis que le talon 82 de sa tige centrale 81 est en contact avec le bouchon 85 du tiroir-navette 78. La coupelle 76 est en contact à la fois avec l'épaulement 84 du tiroir-navette 78 et avec la bague d'appui 80. La surface de contact entre talon 82 et bouchon 85 étant placée à égale distance des appuis du ressort 75 sur les coupelles 76 et 77, le système est en équilibre.

Sur la figure 5, le tiroir-navette 78 est repoussé vers le fond du cylindre 74. Dans ce mouvement, l'épaulement 84 a, à son tour, repoussé la cuvette 76. Dès lors, il n'y a plus de contact entre le talon 82 et le bouchon 85 et c'est l'épaulement 84 qui devient le point d'appui du ressort 75. Sous la compression qu'il subit, celui-ci va donc repousser le cylindre 74 dans le sens de la flèche 88 et si le cylindre est monté comme le cylindre 29 de la figure 1, son mouvement va faire pivoter le renvoi 19, faire remonter l'embiellage 43 et, par le bras 8, mettre le rotor en piqué, tandis que s'il est monté comme le cylindre 49 de la figure 3, il va directement remonter le bras 48, ce qui a également pour résultat de mettre le rotor en piqué.

Sur la figure 6, la position du ressort est inversée.

Le tiroir-navette 78 a été tiré vers l'extérieur du cylindre 74 et, dans ce mouvement, le bouchon 85, en contact avec le talon 82 de la tige 81, a entraîné la cuvette 77 dans le sens de la flèche 89. Lorsque la coupelle 76 est arrivée au contact de la bague d'appui 80, c'est la coupelle 77 qui constitue le seul appui du ressort 75. La compression de ce dernier va repousser le cylindre 74 dans le sens de la flèche 89 et le résultat de ce mouvement sera la mise du rotor au cabré, soit par l'intermédiaire de l'embiellage 43 et du bras 8 (figures 1 et 2),soit directement par le bras 48 ( figure 3).

L'intérêt particulier du système élastique 90 est,outre qu'il est très rare qu'un ressort casse à la compression, que sa rupture éventuelle serait sans effet sur la sécurité.

Il est à noter aussi un intérêt particulier que présente la réalisation des coupelles 76 et 77 en véritables pistons coulissant de façon étanche dans le cylindre 74 : elles constituent ainsi un véritable amortisseur pneumatique des vibrations aérodynamiques venant du rotor et, en l'absence des perforations des coupelles, l'ensemble élastique 90 ne transmettrait aucune de ces vibrations, mais il en résulterait alors un effort trop important pour le pilote lors de la manoeuvre de sa tige de commande de vol. Les perforations ont précisément pour but de permettre le déplacement des coupelles et donc le réglage du ressort 75 sans un effort trop important pour le pilote, tout en conservant aux coupelles, par les pertes de charges qu'elles constituent, l'effet de piston et d'amortisseur pneumatique.

Il serait d'ailleurs possible de ne faire travailler les ressorts 30 et 31 (figure 1) qu'en compression. Pour cela, il suffirait de ne pas les rendre solidaires du piston 32. Mais ils devraient alors être calculés en conséquence.

Bien que l'exemple d'application choisi concerne les autogires à rotor à axe de rotation décalé par rapport à l'axe de tangage, la présente invention s'applique aussi parfaitement aux autogires dont l'axe de rotation du rotor coupe l'axe de tangage. Il est d'ailleurs à noter que sur ces autogires, l'amélioration apportée à la commande par la présente invention est d'autant plus grande-qu'ils ne bénéficient précisément pas de l'amortissement des réactions de tangage que procure le décalage de l'axe de rotation du rotor par rapport à son axe de tangage.

Dans les exemples choisis, on n'a pas équipé l'autogire d'un dispositif élastique d'assistance à la commande de roulis parce que les réactions en sont généralement minimes par rapport au tangage. Mais il est bien évident qu'un tel dispositif pourrait être installé sur les mêmes bases que les exemples décrits. On a vu en effet que le dispositif d'assistance à la commande de tangage était sans incidence sur la commande de roulis. Celle-ci peut donc être équipée d'un dispositif analogue ne gênant en rien la commande de tangage.

Dans les exemples donnés, le bras de manoeuvre du palier portant l'arbre du rotor est situé à l'arrière. Il est bien évident qu'il pourrait être installé, soit entre le mât fixe et le palier, soit à l'avant du mât. Il suffit alors de tenir compte du changement des bras de levier et de la cinématique pour obtenir les mêmes résultats.

En ce qui concerne les ressorts mécaniques, il serait également possible de les remplacer par des dispositifs oléo-pneumatiques permettant une pression et une tension réglables.

On pourrait aussi remplacer le vérin mécanique de l'ensemble 27 à commande électrique par un vérin hydraulique ou par un vérin électromagnétique, par exemple avec un noyau mobile dans un solénoïde.

## Revendications

1. Aéronef à voilure tournante articulée sur le corps du dit aéronef, comportant un levier de commande à la disposition du pilote et un dispositif élastique auxiliaire apportant une aide mécanique au pilote pour le positionnement angulaire du dit corps par rapport à l'axe de rotation de la dite voilure, caractérisé en ce que le dit dispositif élastique est à deux effets axialement opposés et présente un point zéro (32, 50, 82-81-77) déplaçable sous l'effet d'une commande (39, 40) accessible en vol au pilote et indépendante de la position du levier de commande.

2. Aéronef suivant la revendication 1 caractérisé en ce que le dit point zéro (32, 50, 82-81-77) se déplace sous l'effet d'un vérin (27, 54) dont le fonctionnement est indépendant de la position du levier (22) de commande de vol.

3. Aéronef selon la revendication 2 caractérisé en ce que le dispositif élastique est constitué d'un ressort (75) comprimé entre deux coupelles (76,77) mobiles à l'intérieur d'un cylindre (74) mobile par rapport au corps de l'aéronef.

4. Aéronef selon la revendication 3 caractérisé en ce que les coupelles (76, 77) sont montées à coulissement étanche dans le cylindre (74).

5. Aéronef selon la revendication 4 caractérisé en ce que chaque coupelle (76, 77) comporte une perforation mettant ses deux faces en communication l'une avec l'autre.

6. Aéronef selon l'une des revendications 3, 4 et 5 caractérisé en ce que l'organe coulissant assurant l'action du dispositif élastique dans un sens ou à l'opposé comporte deux butées (84, 85) limitant la course des deux coupelles mobiles (76, 77).

7. Aéronef selon la revendication 2 caractérisé en ce que le dispositif élastique qu'il comporte est constitué de deux systèmes élastiques (30-31, 51-52) montés en opposition de part et d'autre d'un appui (32, 50) mobile par rapport au corps de l'aéronef.

8. Aéronef selon la revendication 7 caractérisé en ce que le dispositif élastique qu'il comporte est constitué d'un cylindre (29, 49) à l'intérieur duquel deux ressorts (30-31, 51-52) identiques sont disposés de part et d'autre d'un piston coulissant (32,50).

9. Aéronef selon la revendication 8 caractérisé en ce que les ressorts (30-31, 51-52) disposés à l'intérieur du cylindre (29, 49) sont solidaires du piston coulissant (32, 50).

10. Aéronef selon l'une des revendications 2 à 9 caractérisé en ce que le dispositif élastique (28, 90) est monté avec articulation sur un bras (21) d'un renvoi d'angle (19) dont un autre bras (18) est articulé sur l'une (15) des tiges et barres (12, 13, 14, 15) constituant un embiellage (43) en parallélogramme relié au palier (5) portant l'arbre (4) de la voilure tournante (1).

## Claims

1. Aircraft with rotary-wings articulated on the body of the said aircraft, comprising a control lever at the disposal of the pilot and an auxiliary elastic device providing a mechanical aid to the pilot for the angular positioning of the said body in relation to the rotary axis of the said wings wherein the said elastic device has two axially opposed effects and presents a zero point (32, 50, 82 - 81 - 77) movable under the effect of a control (39, 40) accessible to the pilot during the flight and independent of the position of the control lever.

2. Aircraft according to claim 1 wherein the zero point (32, 50, 82 - 81 - 77) moves under the effect of a jack (27, 54) the functioning of which is independent of the position of the flight control lever (22).

3. Aircraft according to claim 2 wherein the elastic device is constituted by a spring (75) compressed between two mobile cupels (76, 77) inside a mobile cylinder (74) with respect to the body of the aircraft.

4. Aircraft according to claim 3 wherein the cupels (76, 77) are mounted for airtight sliding motion in the cylinder (74).

5. Aircraft according to claim 4 wherein each cupel (76, 77) comprises a perforation putting its two surfaces in communication with one another.

6. Aircraft according to claims 3, 4 and 5 wherein the sliding member ensuring the action of the elastic device in one direction or its opposite comprises two stops (84, 85) limiting the run of the two mobile cupels (76, 77).

7. Aircraft according to claim 2 wherein the elastic device it comprises is constituted by two elastic systems (30-31, 51-52) mounted in opposing fashion on either side of a mobile support (32, 50) with respect to the body of the aircraft.

8. Aircraft according to claim 7 wherein the elastic device it comprises is constituted by a cylinder (29, 49) inside which two identical springs (30-31, 51-52) are placed on either side of a sliding piston (32, 50).

9. Aircraft according to claim 8 wherein the springs (30-31, 51-52) placed inside a cylinder (29, 49) are rigidly locked to the sliding piston (32, 50).

10. Aircraft according to one of claims 2 to 9 wherein the elastic device (28, 90) is mounted in articulation on an arm (21) of a bevel gear (19) another arm of which is articulated on one (15) of the rods and bars (12, 13, 14, 15) constituting a parallelogram-shaped connecting rod system (43) linked to the bearing (5) carrying the axle (4) of the rotary wings (1).

## Patentansprüche

1. Luftfahrzeug mit an seinem Rumpf angelenktem Drehflügel, welches einen für den Piloten verfügbaren Steuerhebel sowie eine elastische Hilfsvorrichtung besitzt, die dem Piloten zwecks winkliger Positionierung des besagten Rumpfes gegenüber der Rotationsachse des besagten Flügels eine mechanische Hilfe bietet, dadurch gekennzeichnet, daß die besagte elastische Vorrichtung zwei axial entgegengesetzte Wirkungen besitzt und einen Nullpunkt (32, 50, 82 - 81 - 77) aufweist, der durch die Einwirkung einer dem Piloten im Flug zugänglichen und von der Steuerhebelstellung unabhängigen Steuerung (39, 40) verschiebbar ist.

2. Luftfahrzeug nach Anspruch 1, dadurch gekennzeichnet, daß der besagte Nullpunkt (32, 50, 82 - 81 - 77) sich unter der Einwirkung eines Stellzylinders (27, 54) verschieben läßt, dessen Betrieb Unabhängig von der Stellung des Hebels (22) für die Flugsteuerung ist.

3. Luftfahrzeug nach Anspruch 2, dadurch gekennzeichnet, daß die elastische Vorrichtung aus einer Feder (75) besteht, die zwischen zwei beweglichen Federtellern (76, 77) im Innern eines gegenüber dem Rumpf des Luftfahrzeuges beweglichen Zylinders (74) zusammengedrückt wird.

4. Luftfahrzeug nach Anspruch 3, dadurch gekennzeichnet, daß die Federteller (76, 77) dicht gleitend in dem Zylinder (74) montiert sind.

5. Luftfahrzeug nach Anspruch 4, dadurch gekennzeichnet, daß jeder Federteller (76, 77) ein Loch hat, das seine beiden Seiten miteinander verbindet.

6. Luftfahrzeug nach einem der Ansprüche 3, 4, und 5, dadurch gekennzeichnet, daß das Schiebeorgan, das die Wirkung der elastischen Vorrichtung in eine bzw. in die entgegengesetzte Richtung bewirkt, zwei Anschläge (84, 85) hat, die den Hub der zwei beweglichen Federteller (76, 77) begrenzen.

7. Luftfahrzeug nach Anspruch 2, dadurch gekennzeignet, daß seine elastische Vorrichtung aus zwei elastischen Systemen (30-31, 51-52) besteht, die beidseits einer gegenüber dem Rumpf des Luftfahrzeuges beweglichen Stütze (32, 50) entgegengesetzt montiert sind.

8. Luftfahrzeug nach Anspruch 7, dadurch gekennzeignet, daß seine elastische Vorrichtung aus einem Zylinder (29, 49) besteht, in dessen Innern zwei identische Federn (30-31, 51-52) beidseits eines Schiebekolbens (32, 50) angeordnet sind.

9. Luftfahrzeug nach Anspruch 8, dadurch gekennzeignet, daß die im Innern des Zylinders (29, 49) angeordneten Federn (30-31, 51-52) fest mit dem Schiebekolben (32, 50) verbunden sind.

10. Luftfahrzeug nach einem der Ansprüche 2 bis 9, dadurch gekennzeichnet, daß die elastische Vorrichtung (28, 90) mit einem Gelenk an einen Arm (21) eines Winkelgetriebes (19) montiert ist, dessen anderer Arm (18) an eine (15) der Stangen (12, 13, 14, 15) angelenkt ist, die einen parallelogrammförmigen Stangensatz (43) bilden, der mit dem die Welle (4) des Drehflügels (1) tragenden Lager (5) verbunden ist.
